# EUROPÄISCHE PATENTSCHRIFT

(11) **EP 1 072 537 B1**
(45) Veröffentlichungstag und Bekanntmachung des Hinweises auf die Patenterteilung: **12.01.2005**
(21) Anmeldenummer: 00115905.2
(22) Anmeldetag: 25.07.2000
(51) Int. Cl.: B65D 90/66, B65B 1/34, B65D 90/58

(54) **Dosiervorrichtung mit hoher Dosiergenauigkeit**
Dosing device with high dosing precision
Dispositif de dosage avec précision de dosage élevée

(30) Priorität: 26.07.1999 DE 19934149; 26.07.1999 DE 19934148; 26.07.1999 DE 19934147
(43) Veröffentlichungstag der Anmeldung: 31.01.2001
(73) Patentinhaber: Neuhäuser GmbH, Umwelt-, Dosier- und Transporttechnologie, 44532 Lünen (DE)
(72) Erfinder: Siepert, Fredy, 59394 Nordkirchen (DE)

(56) Entgegenhaltungen:
- DE-B- 2 908 582
- DE-U- 29 510 531
- GB-A- 1 247 143

## Beschreibung

Die vorliegende Erfindung betrifft eine Dosiervorrichtung nach dem Oberbegriff von Anspruch 1. Sie betrifft ferner eine Absperrvorrichtung zum Einsatz an einer derartigen Dosiervorrichtung sowie ein Verfahren zur Dosierung mit einer derartigen Vorrichtung.

Derartige Dosiervorrichtungen sind allgemein bekannt. Sie werden insbesondere in der Pharma-, Chemie- und Lebensmittelindustrie zum Abfüllen fest vorgegebener Mengen von Schüttgut in Behälter oder Verpackungen eingesetzt. Üblicherweise wird dabei ein pneumatischer Zylinder als Linearantrieb verwendet. Das erfindungsgemäße Prinzip kann jedoch ebenfalls bei anderen, insbesondere bei hydraulischen, elektrischen oder magnetischen Linearantrieben Verwendung finden.

Bei derartigen Dosiervorrichtungen ist einerseits die Geschwindigkeit und andererseits die Genauigkeit, mit der das abzufüllende Schüttgut dosiert werden kann, von großer Bedeutung. Um beiden Forderungen zu genügen, wird bei den bekannten Dosiervorrichtungen ein erheblicher konstruktiver Aufwand betrieben. So ist es bekannt, den Auslaß mittels des verstellbaren Absperrorgans zunächst vollständig zu öffnen, um eine maximale Abfüllgeschwindigkeit zu erreichen. Kurz vor Erreichen der abzufüllenden Schüttgutmenge wird das Absperrorgan derart verstellt, daß nur noch ein kleiner Restquerschnitt der Auslaßöffnung frei bleibt, so daß eine genaue Dosierung möglich ist. Sobald die abzufüllende Schüttgutmenge erreicht ist, wird der Auslaß durch das Absperrorgan vollständig abgeschlossen.

Für einen derartigen Dosiervorgang ist es erforderlich, den Linearantrieb für die teilweise Verschließung der Auslaßöffnung in eine Mittelposition zu bringen. Insbesondere beim Einsatz von Pneumatikzylindern wird dafür ein kompliziertes Regelungssystem benötigt, das die Positionen des Linearantriebes erfaßt und die Einhaltung der gewünschten Mittelposition kontrolliert. Hierfür sind nicht nur besonders empfindliche Wegsensoren (Initiatoren) erforderlich, sondern beim Ausschwingen der Regelgröße zum Anfahren der gewünschten Mittelposition können Ungenauigkeiten in der zu dosierenden Menge des Schüttgutes auftreten.

Ferner ist aus der WO 95/00428 eine Dosiervorrichtung bekannt, bei der zwei Absperrklappen verwendet werden, die in Form eines sogenannten Butterfly-Ventils" angeordnet sind. Dabei ist eine kleinere Absperrklappe konzentrisch in einer größeren Absperrklappe gelagert und beide Absperrklappen sind um eine gemeinsame, durch die Ebene der Absperrklappen verlaufende Achse schwenkbar. Eine derartige Vorrichtung weist jedoch neben der relativ aufwendigen Konstruktionsweise mit vielen abzudichtenden Flächen an der Hohlachse der äußeren Absperrklappe sowie an den Rändern beider Absperrklappen auch zahlreiche Nachteile in der Funktionalität auf. So verbleiben hierbei auch bei voller Öffnung des Auslaßquerschnittes beide Absperrklappen in der Auslaßöffnung und verhindern ein ungestörtes Abführen des zu dosierenden Mediums. Gleichzeitig besteht hierbei eine erhöhte Gefahr der sogenannten Brückenbildung zwischen den Absperrklappen und den Rändern der Auslaßöffnung, so daß Schüttgüter verklemmen können. Beim Lösen derartiger Brücken kann ein schlagartiges Abfallen der verklemmten bzw. verklebten Schüttgutansammlungen leicht zu einer Überschreitung der zu dosierenden Menge führen. Ferner kann es auch beim Schließen der Absperrklappen zum Verklemmen von Schüttgut zwischen den Rändern der Absperrklappen und den Rändern der jeweils umgebenden Öffnung kommen, was zu erheblichen Abdichtungsproblemen führen kann.

Aus der GB 1247143 A, worauf der Oberbegriff der Ansprüche 1 und 12 basiert, ist ferner eine Dosiervorrichtung der eingangs genannten Art bekannt, die einen einzigen Zylinder mit zwei darin geführten Kolben und drei Anschlüssen zur Ansteuerung der beiden Kolben aufweist. Die beiden Kolben bilden dabei zwei koaxial angeordnete Linearantriebe, von denen jedoch keiner unabhängig von dem anderen betätigbar ist. Vielmehr beeinflussen sich die beiden Kolben je nach Ansteuerung der drei Anschlüsse gegenseitig, was wiederum einen erheblichen Aufwand und ein kompliziertes Steuerungs- bzw. Regelungssystem bedingt, um die gewünschte Mittelposition des Absperrorgans einzustellen. Darüber hinaus kann die für die teilweise Öffnung des Auslaß gewünschte Zwischenposition des Schiebers aufgrund der Trägheitskräfte des ersten Kolbens nicht exakt erreicht werden, so daß es zu Ungenauigkeiten bei der Dosierung kommen kann. Während der zweite Kolben genau an einem durch eine Mutter gebildeten äußeren Anschlag anhält, hat der erste Kolben keinen Anschlag, so daß die insgesamt bewegte Masse des ersten Kolbens und aller hiermit verbundenen Teile, insbesondere der Kolbenstange und des daran befestigten Schiebers, zu einer nicht genau vorherbestimmbaren weiteren Bewegung führt. Das führt zu einem undefinierten Restöffnungsquerschnitt des Auslasses und somit zu Unsicherheiten in der Funktion der Vorrichtung. Daher kann es leicht zu Ungenauigkeiten bei der Dosierung kommen, was je nach Art des abzufüllenden Stoffes ein überaus großer Nachteil sein kann.

Aus der DE 295 10 531 U ist darüber hinaus ein Behälter zum Ausbringen von schütt- oder fließfähigen Materialien bekannt, bei dem ein verbindender Hebelarm erforderlich ist, der im Verhältnis zu den beiden Linearantrieben sehr großer ist und eine relativ aufwendige Konstruktion bedingt. Außerdem ist mit der Verschwenkung des Hebelarms jeweils die Bewegung sehr großer zusätzlicher Massen verbunden, was weder eine schnelle Bewegung noch den Einsatz einfach ausgeführter Linearantriebe ermöglicht.

Aufgabe der Erfindung ist es, eine leicht handhabbare und preiswert herzustellende Dosiervorrichtung der eingangs genannten Art zu schaffen, die bei einfacher Konstruktion und einfacher Ansteuerbarkeit sowie hoher Funktionssicherheit eine schnelle und exakte Dosierung des abzufüllenden Schüttgutes ermöglicht. Aufgabe der Erfindung ist es ferner, eine einzelne Absperrvorrichtung zum Einsatz an einer derartigen Dosiervorrichtung sowie ein Verfahren für eine derartige Vorrichtung bereit zu stellen, daß eine besonders exakte Dosierung des abzufüllenden Schüttgutes gestattet.

Diese Aufgabe wird erfindungsgemäß durch eine Vorrichtung nach Anspruch 1 bzw. 12 sowie durch ein Verfahren nach Anspruch 13 gelöst. Wesentlich ist dabei, daß der zweite Linearantrieb unabhängig von dem ersten Linearantrieb ansteuerbar bzw. betätigbar ist, derart daß bei verschlossenem Auslaß und bei vollständig freigegebenem Auslaß sowie auch bei teilweise freigegebenem Auslaß sowohl der erste als auch der zweite Linearantrieb jeweils nur in Endlagen positioniert sind.

Der wesentliche Vorteil der erfindungsgemäßen Vorrichtung besteht darin, daß die Positionierung eines Linearantriebes in einer bestimmten Mittelposition nicht mehr erforderlich ist. Daher kann auf die hierzu erforderlichen aufwendigen Regelungssysteme verzichtet werden. Da der zweite Linearantrieb unabhängig ist von dem ersten Linearantrieb und somit die Stellung des ersten Linearantriebs nicht von einer Verstellung des zweiten Linearantriebs beeinflußt wird, kann auch die gewünschte Mittelposition des Absperrorgans leicht eingestellt werden. Sowohl der erste als auch der zweite Linearantrieb brauchen dabei jeweils lediglich in Endlagen positioniert zu werden, was eine besonders einfache Ansteuerung ohne aufwendige Regelungssysteme ermöglicht. Die erfindungsgemäße Vorrichtung gestattet aufgrund ihrer einfachen Konstruktion nicht nur eine leichte Handhabung, sondern insbesondere auch eine preiswerte Herstellbarkeit sowie einen kostengünstigen und funktionssicheren Betrieb.

Vorteilhaft ist bei der erfindungsgemäßen Vorrichtung ferner, daß der Auslaß vollständig geöffnet werden kann und nicht durch ein lediglich quergestelltes Absperrorgan auch bei Öffnung noch teilweise blockiert wird. Die Gefahr der Brückenbildung und einer damit verbundenen Funktionsstörung bzw. die Gefahr einer ungenauen Dosierung insbesondere bei Behebung der Störungen ist somit erheblich reduziert.

Anstelle des Trichters kann im Sinne der vorliegenden Erfindung auch der Auslauf einer der Dosierung vorgeschalteten verfahrenstechnischen Vorrichtung verwendet werden.

Besonders vorteilhaft ist es, wenn der erste Linearantrieb einen größeren Verstellweg hat als der zweite Linearantrieb. Hierdurch kann auf besonders einfache Weise nicht nur die vollständige Freigabe oder die vollständige Verschließung des Auslasses, sondern auch die zur abschließenden Feindosierung erforderliche kleine Teilöffnung des Auslasses eingestellt werden.

In einer bevorzugten Ausführungsform der Erfindung kann die Position des ersten Linearantriebes durch den zweiten Linearantrieb verändert werden. Die Veränderung der Position des gesamten ersten Linearantriebes bedeutet dabei keine Verstellung des ersten Linearantriebes an sich. Das heißt, daß die eingestellte Länge des ersten Linearantriebes hierbei konstant bleibt. Dabei wirkt der erste Linearantrieb zwischen dem verstellbaren Absperrorgan und dem zweiten Linearantrieb. Der zweite Linearantrieb wirkt zwischen dem feststehenden Gestell oder Gehäuse der Dosiervorrichtung und dem ersten Linearantrieb.

Besonders vorteilhaft ist es, wenn die beiden Linearantriebe durch pneumatische Zylinder gebildet sind. Hierdurch kann auf besonders einfache Weise bei geringem Gewicht und geringem Platzbedarf eine schnelle und exakte Verstellung erreicht werden.

Bei einer besonders bevorzugten Ausführungsform der Erfindung, bei der pneumatischen Zylinder als Linearantriebe verwendet werden und bei der insbesondere die Position des ersten Linearantriebes durch den zweiten Linearantrieb veränderbar ist, sind die beiden Zylinder an den jeweils der Austrittsstelle der Kolbenstangen abgewandten Stirnseiten miteinander verbunden. Die beiden Zylinder sind dabei nach wie vor unabhängig voneinander betätigbar, d. h. die beiden Zylinder beeinflussen sich gegenseitig nicht in ihrer internen Einstellung bzw. internen Positionierung des Kolbens. Jedoch kann der erste Zylinder bei konstant feststehender interner Positionierung des ersten Kolbens durch eine Betätigung des zweiten Zylinders insgesamt relativ zur gesamten Vorrichtung bewegt werden. Auf diese Weise wird eine sehr kleinbauende kompakte Zylindereinheit geschaffen, an deren beiden Stirnseiten jeweils eine Kolbenstange heraustritt, die unabhängig von der jeweils anderen Kolbenstange verstellbar ist. Eine Kolbenstange ist dabei an dem verstellbaren Absperrorgan angelenkt, während die andere Kolbenstange an dem feststehenden Gehäuse oder Gestell der Dosiervorrichtung oder an einem fest hiermit verbundenen Teil angelenkt ist.

Besonders vorteilhaft ist es, wenn Mittel, insbesondere Stellschrauben, zur Einstellung der Verstellgeschwindigkeit eines oder beider Linearantriebe vorgesehen sind. Auf diese Weise kann die Verstellgeschwindigkeit den Anforderungen bei unterschiedlichen Schüttgütern schnell und einfach angepaßt werden.

Besonders vorteilhaft ist es ferner, wenn die Anlenkung eines oder beider Linearantriebe an dem Gehäuse oder Gestell der Dosiervorrichtung und/oder an dem Absperrorgan verstellbar sind. Auf diese Weise kann der bei der teilweisen Verschließung der Auslaßöffnung freibleibende Öffnungsquerschnitt besonders einfach eingestellt und an die Rieseleigenschaften verschiedener Schüttgüter angepaßt werden.

In einer bevorzugten Ausführungsform ist das Absperrorgan durch einen Schwenkschieber mit einer um eine zur Längsachse des Trichters parallele Achse schwenkbaren Scheibe gebildet. Die vorliegende Erfindung kann jedoch ebenfalls bei anderen Bauformen von Absperrorganen angewendet werden, beispielsweise bei Schiebern, Hähnen oder Klappen.

Besonders vorteilhaft ist es, wenn zwischen dem Auslaß des Trichters und dem Absperrorgan eine Dichtbuchse vorzugsweise aus Polytetrafluorethylen (PTFE) angeordnet ist. Eine derartige Dichtbuchse ist beständig gegen nahezu alle Chemikalien und sie nimmt keine Feuchtigkeit auf.

In einer weiteren bevorzugten Ausführungsform ist der Trichter aus einer Blechrunde gedrückt und mit einer hochglanzpolierten Innenwandung versehen. Auf diese Weise kann eine sehr viel höhere Fertigungsgenauigkeit mit einer Toleranz im Mikrometerbereich und somit ein für eine exakte Dosierung erforderliches, gleichmäßiges und störungsfreies Nachrutschen des Schüttgutes erreicht werden.

Besonders günstig ist es, wenn die Wandung des Trichters zu seiner Längsachse einen Winkel zwischen -10° und 50°, vorzugsweise zwischen 25° und 30° aufweist. Insbesondere kann der Winkel auch 0° oder bei bestimmten Schüttgütern auch negative Werte annehmen.

Besonders vorteilhaft ist es ferner, wenn die Komponenten der Dosiervorrichtung, insbesondere der Trichter und das Absperrorgan nicht miteinander verschweißt, sondern über mehrere Zugmittel miteinander verspannt sind. Die Zugmittel können dabei in vorteilhafter Weise durch Montagesäulen gebildet sein, die mit Gewinden zum Aufschrauben von Muttern versehen sind. Hierdurch wird nicht nur ein möglicher Wärmeverzug beim Zusammenschweißen oder Anschweißen des Trichters verhindert, sondern es ist mit sehr geringem Aufwand ein einfacher Austausch einzelner Teile der erfindungsgemäßen Vorrichtung möglich. Auch können einzelne, beim Benutzer gegebenenfalls schon vorhandene Komponenten der Vorrichtung leicht abgetrennt und lediglich die benötigten Komponenten geliefert werden.

Gegenstand der vorliegenden Erfindung ist in diesem Sinne insbesondere auch eine Absperrvorrichtung für eine Dosiervorrichtung der zuvor beschriebenen Art, die lediglich ein in zwei Endpositionen und in eine Mittelposition verstellbares Absperrorgan und zwei koaxial angeordnete und unabhängig voneinander betätigbare Linearantriebe umfaßt, durch die das Absperrorgan jeweils derart verstellbar ist, daß bei allen drei Positionen des Absperrorgans sowohl der erste als auch der zweite Linearantrieb jeweils nur in Endlagen positioniert sind. Vorzugsweise kann eine derartige Absperrvorrichtung auch eine Aufnahme für einen anzuschließenden Trichter oder Auslauf eines vorgeschalteten Apparates bzw. Behälters umfassen, wobei die Öffnung der Aufnahme bei verschlossenem Zustand gegen das Absperrorgan abgedichtet ist.

Eine besonders exakte Dosierung des abzufüllenden Schüttgutes ist dann möglich, wenn das Absperrorgan zunächst vollständig geöffnet wird und bei Erreichen einer ersten vorbestimmbaren abgefüllten Schüttgutmenge nur noch teilweise geöffnet wird und bei Erreichen einer zweiten vorbestimmbaren abgefüllten Schüttgutmenge vollständig geschlossen wird. Dabei können die abzufüllenden Schüttgutmengen vorzugsweise über ihr Gewicht vorbestimmt werden.

Besonders vorteilhaft ist es, wenn das Absperrorgan nach dem erfindungsgemäßen Verfahren bei Erreichen der zweiten vorbestimmbaren abgefüllten Schüttgutmenge zunächst vollständig geschlossen wird und anschließend mehrfach kurzzeitig teilweise geöffnet und wieder geschlossen wird. Dieses kurzzeitige Öffnen und Schließen des Absperrorganes wird solange wiederholt, bis die abzufüllende Schüttgutmenge innerhalb der zulässigen Toleranzgrenzen erreicht ist. Dadurch sind besonders exakte Dosierungen möglich.

Vorzugsweise kann dieses mehrfache kurzzeitige teilweise Öffnen und Schließen des Absperrorgans über eine Betätigung des zweiten Linearantriebes ausgeführt werden.

Weitere Vorteile und Merkmale der Erfindung ergeben sich aus der nachfolgenden Beschreibung und den in den Zeichnungen dargestellten Ausführungsbeispielen.

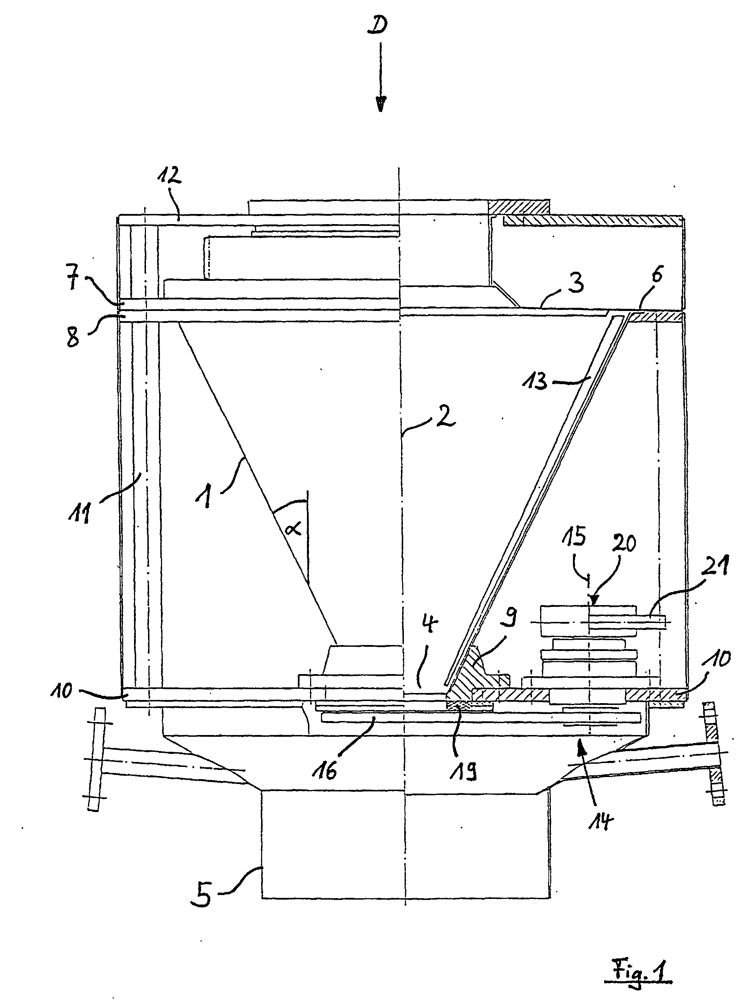

Es zeigen
- Figur 1:: Teilgeschnittene Seitenansicht einer erfindungsgemäßen Dosiervorrichtung
- Figur 2:: Ansicht der Dosiervorrichtung aus Richtung D in Figur 1 mit teilweise weggeschnittenem Trichter und verschlossenem Auslaß
- Figur 3:: Ansicht entsprechend Figur 2 mit teilweise geöffnetem Auslaß und
- Figur 4:: Ansicht entsprechend Figur 2 mit vollständig geöffnetem Auslaß

Die in den Figuren gezeigte Dosiervorrichtung kann vorzugsweise in der Pharma-, Chemie- oder Lebensmittelindustrie eingesetzt werden und entspricht den FDA- (Food and Drug Administration) und GMP- (Good Manufactoring Practice) Richtlinien. Sie dient dazu, rieselfähiges Schüttgut, insbesondere Pulver aus einem nicht näher gezeigten großen Vorratsbehälter in exakt dosierten Mengen in kleine Transportbehälter, insbesondere in Tüten oder Säcke abzufüllen. Die Dosiervorrichtung eignet sich insbesondere zur Dosierung von leichtbis schwerfließendem Schüttgut mit einer Feuchtigkeit von bis zu 50 %.

Die Dosiervorrichtung weist einen Trichter 1 auf, der um eine senkrechte Längsachse 2 angeordnet ist. Oberhalb der oberen, großen Einlaßöffnung 3 des Trichters 1 befindet sich ein nicht näher dargestellter Vorratsbehälter für das zu dosierende Schüttgut. Auf einen unterhalb der unteren, kleinen Auslaßöffnung 4 des Trichters 1 angeordneten Stutzen 5 können Säcke befestigt werden, in die das Schüttgut in dosierten Mengen abgefüllt wird.

Die Trichterabmessungen sind den Eigenschaften, insbesondere der Rieselfähigkeit des zu dosierenden Schüttgutes angepaßt. In einer bevorzugten Ausführungsform hat der Trichter 1 bei einem Neigungswinkel α von 25° eine Einlaßöffnung 3 von 440 mm Durchmesser und eine Auslaßöffnung 4 von 80 mm Durchmesser. Ein Trichter 1 mit derartigen Abmessungen ist für viele besonders häufig abzufüllende Schüttgutarten geeignet.

Der Trichter 1 ist nicht aus einer Abwicklung zusammengeschweißt, sondern wird auf einer Spezialmaschine aus einer Ronde im kalten Zustand herausgedrückt. Durch eine derartige Fertigungsmethode ist eine sehr viel höhere Fertigungsgenauigkeit mit einer Toleranz im Mikrometerbereich erreichbar. Die Trichterinnenwände werden hochglanzpoliert, so daß eine Oberflächenrauhigkeit Rₐ von ca. 0,4 µm erreicht werden kann, wodurch das Nachrutschen des Schüttgutes im Trichter 1 erleichtert wird.

Der obere Teil des Trichters 1 weist umlaufend einen kleinen Bördelflansch 6 auf. Dieser Bördelflansch 6 wird zwischen einen mit einer zentralen Öffnung versehenen Deckel 7, der den Trichter 1 nach oben hin abschließt und einem Andrückflansch 8 geklemmt und bildet den oberen Abschluß der Dosiervorrichtung.

Der untere Teil des Trichters 1 wird in eine Trichteraufnahme 9 eingesetzt, die mit einem Grundflansch 10 verschraubt ist. Der Grundflansch 10, der Andrückflansch 8 und der Deckel 7 werden über mehrere Montagesäulen 11, ggf. noch mit weiteren Komponenten, beispielsweise mit dem Deckelflansch 12 einer darüber angeordneten mechanischen Austragshilfe verspannt. Ein Verschweißen der einzelnen Bauteile ist hierbei nicht erforderlich. Hierdurch wird zum einen verhindert, daß durch das Anschweißen der Trichteraufnahme 9 Wärmeverzug im Trichter 1 auftritt und zum anderen ist es dadurch auf besonders einfache Weise möglich, einzelne Teile mit geringem Aufwand auszutauschen.

Günstig ist es ferner, wenn als mechanische Austragshilfe ein in geringem Abstand zu der Innenwandung des Trichters 1 umlaufender Aktivator 13 vorgesehen ist, der ein einwandfreies Nachrutschen des Schüttgutes im Trichter 1 sicherstellt.

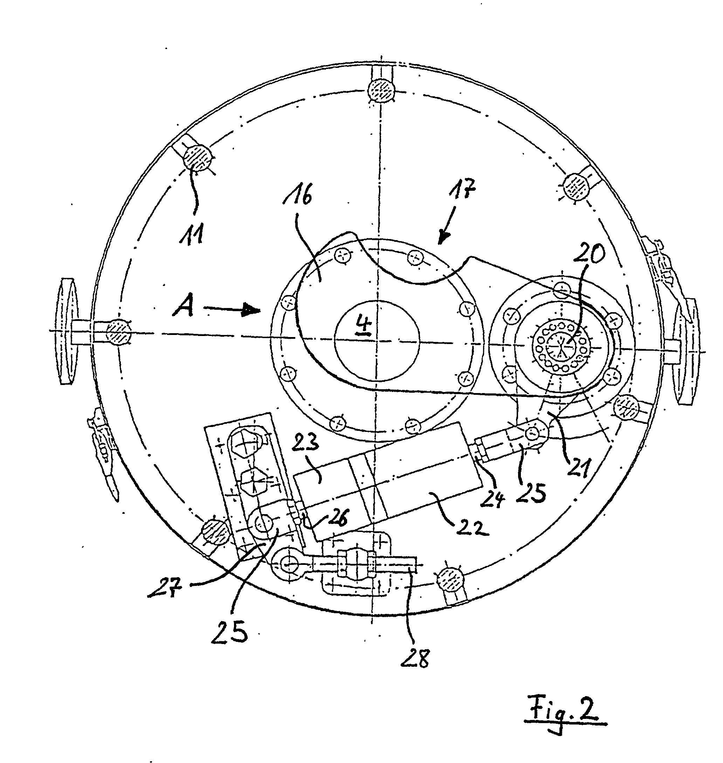

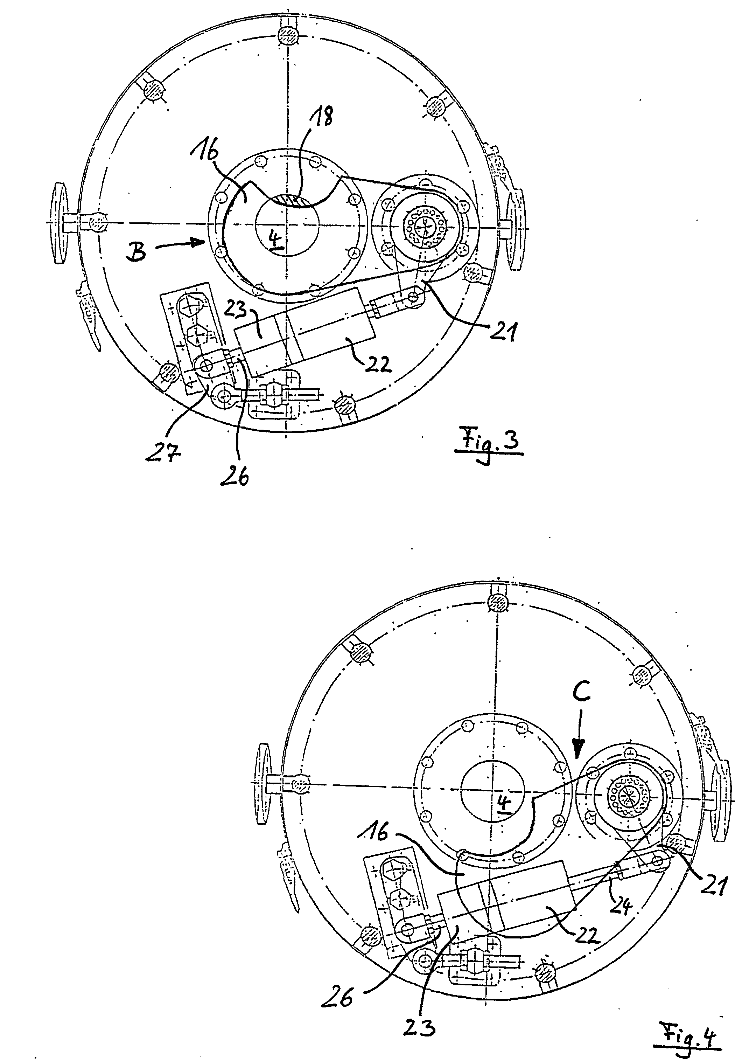

Unterhalb der Trichteraufnahme 9 befindet sich als Absperrorgan ein Schwenkschieber 14. Der Schwenkschieber 14 weist eine um eine zur Längsachse 2 des Trichters 1 parallele Achse 15 schwenkbare Scheibe 16 auf. Die Scheibe 16 ist an ihrem äußeren freien Ende so breit ausgeführt, daß sie den unteren Auslaß 4 des Trichters 1 in der Endposition A vollständig absperren kann (Figur 2). An einer Seite ist die Scheibe 16 mit einer im wesentlichen halbkreisförmigen Ausnehmung 17 versehen, deren Abstand von der Schwenkachse 15 zumindest annähernd dem Abstand zwischen der Schwenkachse 15 und der Auslaßöffnung 4 entspricht. Die Ausnehmung 17 gibt in der Mittelposition B der Scheibe 16, bei der der Auslaß 4 nur teilweise verschlossen ist (Figur 3), für einen minimalen Schüttgutdurchsatz einen kleinen Bereich 18 als Restquerschnitt des Auslasses 4 frei. In der zweiten Endposition C der Scheibe 16 (Figur 4) ist der Auslaß 4 zum maximalen Schüttgutdurchsatz vollständig freigegeben.

Zwischen der Scheibe 16 des Schwenkschiebers 14 und der Trichteraufnahme 9 ist eine Dichtbuchse 19 aus Polytetrafluorethylen (PTFE) angeordnet, die die Scheibe 16 in der ersten Endposition A gegen die Trichterauflage 9 bzw. den Trichter 1 abdichtet.

Die Scheibe 16 ist rechtwinklig an das untere Ende einer Welle 20 angeschweißt, die um die Achse 15 schwenkbar in dem Grundflansch 10 gelagert ist. Oberhalb des Grundflansches 10 ist ein Hebel 21 vorzugsweise mittels einer Spannbuchse drehfest an der Welle 20 befestigt. Am äußeren Ende des Hebels 21 befindet sich der Krafteinleitpunkt der Linearantriebe 22 und 23.

In dem dargestellten Ausführungsbeispiel sind die Linearantriebe durch einen ersten Pneumatikzylinder 22 und einen zweiten Pneumatikzylinder 23 gebildet. Die Kolbenstange 24 des ersten Pneumatikzylinders 22 ist am äußeren Ende des Hebels 21 über einen Gabelkopf 25 angelenkt. Die Kolbenstange 26 des zweiten Pneumatikzylinders 23 ist an einem mit dem Grundflansch 10 verbundenen Steg 27 über einen Gabelkopf 25 angelenkt. An den beiden den Austrittsstellen der beiden Kolbenstangen 24, 26 abgewandten Stirnseiten sind die beiden Pneumatikzylinder 22, 23 koaxial miteinander verbunden, so daß der erforderliche Einbauraum minimal ist. Der erste Pneumatikzylinder 22 hat einen ca. 5-fach größeren Hub als der zweite Pneumatikzylinder 23. Die nicht näher dargestellten Steuerungselemente der Pneumatikzylinder 22, 23, insbesondere zwei Magnetventile, ein Druckluftspeicher sowie eine Wartungseinheit sind in einem Pneumatikschaltschrank angeordnet, der sich in unmittelbarer Nähe der Dosiervorrichtung befindet.

Wenn beide Kolbenstangen 24, 26 der Pneumatikzylinder 22, 23 herausgefahren sind, befindet sich die Scheibe 16 in der Endposition C und der Auslaß 4 des Trichters 1 ist vollständig geöffnet (Figur 4). Wenn nur die Kolbenstange 26 des zweiten Pneumatikzylinders 23 herausgefahren ist und die Kolbenstange 24 des ersten Pneumatikzylinders 22 eingefahren ist, befindet sich die Scheibe 16 in der Mittelposition B, bei der der Auslaß 4 lediglich teilweise in dem Bereich 18 geöffnet ist (Figur 3). Beide Pneumatikzylinder 22, 23 befinden sich hierbei in einer Endlage, die besonders einfach und schnell angesteuert werden können. Eine aufwendige Regelungseinrichtung zum Einstellen der Mittelposition B der Scheibe 16 ist daher nicht erforderlich. Wenn beide Kolbenstangen 24, 26 eingefahren sind, befindet sich die Scheibe 16 in der Endposition A, bei der der Auslaß 4 vollständig verschlossen ist (Figur 2).

Zu Beginn eines Abfüllvorganges befindet sich die Scheibe 16 in der Position A. Ein mit Schüttgut zu befüllender Sack wird an den Stutzen 5 befestigt. Anschließend werden beide Pneumatikzylinder 22, 23 ausgefahren, so daß sich die Scheibe 16 in der Position C befindet und der angehängte Sack bei hohem Schüttgutdurchsatz in kurzer Zeit bei vollständig geöffnetem Auslaß 4 bis zu einem frei vorprogrammierbaren Gewicht gefüllt wird. Bei Erreichen dieses vorprogrammierten Gewichtes, das um einen geringen Anteil unterhalb der gewünschten Gesamtfüllmenge des Sackes liegt, wird die Kolbenstange 24 des ersten Pneumatikzylinders 22 eingefahren und die Scheibe 16 in die Position B gebracht. In dieser Position wird bei nur noch geringem Schüttgutdurchsatz durch den freien Bereich 18 des nur noch zu einem kleinen Anteil geöffneten Auslasses 4 die gewünschte Gesamtfüllmenge in den angehängten Sack gefüllt. Sobald das gewünschte Endgewicht erreicht ist, wird durch Einfahren der Kolbenstange 26 des zweiten Pneumatikzylinders 23 die Scheibe 16 in die Position A gebracht und der Auslaß 4 vollständig verschlossen. Der Dosiervorgang ist damit bei geringer Füllzeitdauer und hoher Dosiergenauigkeit abgeschlossen.

Bei einem alternativen Abfüllvorgang wird kurz vor Erreichen des gewünschten Endgewichtes die Scheibe 16 zunächst in die Position A gebracht, so daß der Auslaß 4 vollständig verschlossen ist. Anschließend wird die Kolbenstange 26 des zweiten Pneumatikzylinders 23 noch mehrfach kurzzeitig ausund wieder eingefahren, wodurch die Scheibe 16 mehrfach kurzzeitig in die Position B gebracht wird, in der der Auslaß 4 nur zu einem kleinen Teil geöffnet ist. Nach diesem kurzzeitigen Öffnen, das beispielsweise 0,5 Sekunden andauern kann, wird der Auslaß 4 sofort wieder vollständig verschlossen. Durch diesen sogenannten Tipbetrieb, der durch einfache Ansteuerung des zweiten Pneumatikzylinders 23 problemlos in der erforderlichen Geschwindigkeit durchgeführt werden kann, ist eine besonders exakte Dosierung in engen Toleranzgrenzen möglich. So kann beispielsweise bei abzufüllenden Schüttgutmengen von 25 Kilogramm problemlos eine Toleranz von ± 5 Gramm eingehalten werden, wobei der Auslaß 4 vorzugsweise bis zu einem Gewicht von 24,5 Kilogramm vollständig geöffnet ist, anschließend bis zu einem Gewicht von 24,95 Kilogramm teilweise geöffnet ist und der Auslaß 4 ab einem abgefüllten Gewicht von 24,95 Kilogramm zunächst für wenige Sekunden vollständig verschlossen wird und danach mehrfach kurzzeitig für jeweils ca. 0,5 Sekunden geöffnet und sofort wieder verschlossen wird.

Der Steg 27 ist um eine zur Achse 15 parallele Achse schwenkbar an dem Grundflansch 10 befestigt. Durch Verdrehen einer Gewindestange 28 ist der Steg 27 stufenlos verschwenkbar. Dadurch kann der Anlenkpunkt des zweiten Pneumatikzylinders 23 relativ zum Grundflansch 10 verändert werden, so daß die Größe des als Restquerschnitt freibleibenden Bereichs 18 in der Mittelposition B der Scheibe 16 an die Eigenschaften verschiedener Schüttgüter angepaßt werden kann.

## Patentansprüche

1. Dosiervorrichtung zur Dosierung von leicht- und schwerfließendem oder rieselfähigem Schüttgut, insbesondere von Pulvern, mit einem Trichter, in dessen Einlaß das Schüttgut einführbar ist und aus dessen Auslaß das Schüttgut in dosierten Mengen abführbar ist, wobei am Auslaß ein mittels eines ersten Linearantriebes (22) verstellbares Absperrorgan (14) angeordnet ist, mit dem der Auslaß verschließbar sowie teilweise oder vollständig freigebbar ist, wobei ein zweiter Linearantrieb (23) zur Verstellung des Absperrorgans (14) angeordnet ist, wobei die Linearantriebe (22, 23) koaxial hintereinander angeordnet sind,
**dadurch gekennzeichnet,**
**daß** der zweite Linearantrieb (23) unabhängig von dem ersten Linearantrieb (22) betätigbar ist.

2. Vorrichtung nach Anspruch 1, **dadurch gekennzeichnet, daß** der erste Linearantrieb (22) einen größeren Verstellweg hat als der zweite Linearantrieb (23).

3. Vorrichtung nach einem der vorherigen Ansprüche, **dadurch gekennzeichnet, daß** die Linearantriebe durch pneumatische Zylinder (22, 23) gebildet sind.

4. Vorrichtung nach Anspruch 1 und 3, **dadurch gekennzeichnet, daß** die beiden Zylinder (22, 23) an den der Austrittsstelle der Kolbenstangen (24, 26) abgewandten Stirnseiten miteinander verbunden sind.

5. Vorrichtung nach einem der vorherigen Ansprüche, **dadurch gekennzeichnet, daß** Mittel, insbesondere Stellschrauben, zur Einstellung der Verstellgeschwindigkeit eines oder beider Linearantriebe (22, 23) vorgesehen sind.

6. Vorrichtung nach einem der vorherigen Ansprüche, **dadurch gekennzeichnet, daß** die Anlenkpunkte eines oder beider Linearantriebe (22, 23) an dem Gehäuse oder Gestell der Dosiervorrichtung und/oder an dem Absperrorgan (14) verstellbar sind.

7. Vorrichtung nach einem der vorherigen Ansprüche, **dadurch gekennzeichnet, daß** das Absperrorgan durch einen Schwenkschieber (14) mit einer um eine zur Längsachse (2) des Trichters (1) parallele Achse (15) schwenkbaren Scheibe (16) gebildet ist.

8. Vorrichtung nach einem der vorherigen Ansprüche, **dadurch gekennzeichnet, daß** zwischen dem Auslaß (4) des Trichters (1) und dem Absperrorgan (14) eine Dichtbuchse (19) vorzugsweise aus Polytetrafluorethylen angeordnet ist.

9. Vorrichtung nach einem der vorherigen Ansprüche, **dadurch gekennzeichnet, daß** der Trichter (1) aus einer Blechronde gedrückt ist und eine hochglanzpolierte Innenwandung aufweist.

10. Vorrichtung nach einem der vorherigen Ansprüche, **dadurch gekennzeichnet , daß** der Trichter (1), das Absperrorgan (14) und weitere Komponenten der Dosiervorrichtung über mehrere Zugmittel (11) miteinander verspannt sind.

11. Vorrichtung nach einem der vorherigen Ansprüche, **dadurch gekennzeichnet, daß** die Wandung des Trichters (1) zu seiner Längsachse (2) einen Winkel α zwischen -10° und 50°, vorzugsweise zwischen 25° und 30° aufweist.

12. Absperrvorrichtung für eine Dosiervorrichtung nach einem der vorherigen Ansprüche, umfassend ein in zwei Endpositionen (A, C) sowie in eine Mittelposition (B) verstellbares Absperrorgan (14) und zwei koaxial angeordnete Linearantriebe (22, 23), durch die das Absperrorgan (14) jeweils verstellbar ist **gekennzeichnet dadurch, daß** die zwei linearantriebe (22, 23) unabhängig voneinander betätigbar sind.

13. Verfahren zur Dosierung von Schüttgut mit einer Vorrichtung nach einem der vorherigen Ansprüche, mit einem mittels eines ersten Linearantriebs und eines unabhängig hiervon betätigbaren zweiten Linearantriebs verstellbaren Absperrorgan, vermittels dem der Auslaß der Vorrichtung verschließbar sowie teilweise oder vollständig freigebbar ist, wobei
- das Absperrorgan zunächst vollständig geöffnet wird,
- das Absperrorgan bei Erreichen einer ersten insbesondere über das Gewicht vorbestimmbaren abgefüllten Schüttgutmenge teilweise geöffnet wird, und
- das Absperrorgan bei Erreichen einer zweiten insbesondere über das Gewicht vorbestimmbaren abgefüllten Schüttgutmenge vollständig geschlossen wird,
wobei das Absperrorgan bei Erreichen der zweiten insbesondere über das Gewicht vorbestimmbaren abgefüllten Schüttgutmenge zunächst vollständig geschlossen wird und anschließend mehrfach kurzzeitig teilweise geöffnet und geschlossen wird.

14. Verfahren nach Anspruch 13, **dadurch gekennzeichnet, daß** das mehrfache kurzzeitige teilweise Öffnen und Schließen des Absperrorgans über eine Betätigung des zweiten Linearantriebes ausgeführt wird.

## Claims

1. A dosing apparatus for dosing of easily-flowing and viscous or fluid loose material, in particular, of powders, with a hopper, in whose inlet, the loose material can be introduced and from whose outlet, the loose material can be dispensed in dosed amounts, whereby on the outlet, an shut-off device (14) that can be adjusted by means of a first linear drive (22) is arranged, with which the outlet can be locked and can be partially or completely released, whereby a second linear drive (23) is arranged for adjustment of the shut-off device (14), whereby the linear drives (22, 23) are arranged coaxially behind one another,
**characterized in that**
the second linear drive (23) can be actuated independently from the first linear drive (22).

2. The apparatus according to claim 1, **characterized in that** the first linear drive (22) has a greater adjusting path than the second linear drive (23).

3. The apparatus according to one of the preceding claims, **characterized in that** the linear drives are formed by pneumatic cylinders (22, 23).

4. The apparatus according to claim 1 and 3, **characterized in that** both cylinders (22, 23) are connected to one another on front sides facing away from the exit point of the piston rods (24, 26).

5. The apparatus according to one of the preceding claims, **characterized in that** means, in particular, adjustment screws, for adjusting the adjusting speed of one or both linear drives (22, 23) are provided.

6. The apparatus according to one of the preceding claims, **characterized in that** the pivotal points of one or both linear drives (22, 23) are adjustable on the housing or the base frame of the dosing apparatus and/or on the shut-off device (14).

7. The apparatus according to one of the preceding claims, **characterized in that** the shut-off device is formed by a pivoting slider (14) with a disk (16) that is pivotable about an axis (15) running parallel to a longitudinal axis (2) of the hopper (1).

8. The apparatus according to one of the preceding claims, **characterized in that** between the outlet (4) of the hopper (1) and the shut-off device (14), a sealing bushing (19), preferably made from poly-tetra-fluorethylene, is arranged.

9. The apparatus according to one of the preceding claims, **characterized in that** the hopper (1) is pressed from a sheet disk and has a mirror-finished inner wall.

10. The apparatus according to one of the preceding claims, **characterized in that** the hopper (1), the shut-off device (14), and further components of the dosing apparatus are braced with one another by means of multiple tension mediums (11).

11. The apparatus according to one of the preceding claims, **characterized in that** the wall of the hopper (1) has an angle a to its longitudinal axis (2) between -10° and 50°, preferably, between 25° and 30°.

12. A shut-off apparatus for a dosing apparatus according to one of the preceding claims, including a shut-off device (14) that can be adjusted in two end positions (A, C) and in a center position (B) and two coaxially arranged linear drives (22, 23), by means of which the shut-off device (14) is respectively adjustable,
**characterized in that**
the two linear drives (22, 23) can be actuated independently from one another.

13. A method for dosing loose material with an apparatus according to one of the preceding claims, with a shut-off device that is adjustable by means of a first linear drive and a second linear drive that is independently actuatable from the first linear drive, by means of which the outlet of the apparatus can be locked and partially or completely released, whereby
- the shut-off device is first completely opened,
- the shut-off device is partially opened upon reaching a first, filled amount of loose material, in particular, over the weight of a predetermined, filled amount of loose material, and
- the shut-off device is closed upon reaching a second, filled amount of loose material, in particular, over the weight of a predetermined, filled amount of loose material,
whereby the shut-off device, upon reaching the second amount of loose material, in particular, over the weight of a predetermined, filled amount of loose material, is first completely closed and next is repeatedly and temporarily partially opened and closed.

14. The method according to claim 13, **characterized in that** the repeated, temporary, partial opening and closing of the shut-off device is executed via an actuation of the second linear drive.

## Revendications

1. Dispositif de dosage pour le dosage de produit en vrac facilement et difficilement liquide ou apte à l'écoulement, notamment de poudres, comportant un entonnoir dans l'entrée duquel le produit en vrac peut être introduit et par la sortie duquel le produit en vrac peut être évacué en quantités dosées, étant prévu à la sortie un organe de blocage (14) réglable au moyen d'un premier organe de commande linéaire (22) qui permet de libérer la sortie avec possibilité de fermeture aussi bien partiellement que totalement, un deuxième organe de commande linéaire (23) étant disposé pour régler l'organe de blocage (14), les organes de commande linéaires (22, 23) étant disposés coaxialement l'un derrière l'autre,
**caractérisé en ce que**
le deuxième organe de commande linéaire (23) est actionnable indépendamment du premier organe de commande linéaire (22).

2. Dispositif selon la revendication 1, **caractérisé en ce que** le premier organe de commande linéaire (22) a une course de réglage plus grande que le deuxième organe de commande linéaire (23).

3. Dispositif selon l'une quelconque des revendications précédentes, **caractérisé en ce que** les organes de commande linéaire sont formés par des vérins pneumatiques (22, 23).

4. Dispositif selon les revendications 1 et 3, **caractérisé en ce que** les deux vérins (22, 23) sont reliés l'un à l'autre sur les faces frontales détournées du point de sortie des bielles de pistons (24, 26).

5. Dispositif selon l'une quelconque des revendications précédentes, **caractérisé en ce que** sont prévus des moyens, notamment des vis de réglage, pour l'ajustement de la vitesse de réglage de l'un ou des deux organes de commande linéaire (22, 23).

6. Dispositif selon l'une quelconque des revendications précédentes, **caractérisé en ce que** les points d'articulation de l'un ou des deux organes de commande linéaire (22, 23) sont réglables sur l'enceinte ou le châssis du dispositif de dosage et/ou sur l'organe de blocage (14).

7. Dispositif selon l'une quelconque des revendications précédentes, **caractérisé en ce que** l'organe de blocage est constitué par une tirette pivotante (14) comprenant un disque (16) pivotable autour d'un axe parallèle (15) à l'axe longitudinal (2) de l'entonnoir (1).

8. Dispositif selon l'une quelconque des revendications précédentes, **caractérisé en ce qu'**entre la sortie (4) de l'entonnoir (1) et l'organe de blocage (14) est disposée une douille d'étanchéité (19) de préférence en polytétrafluoréthylène.

9. Dispositif selon l'une quelconque des revendications précédentes, **caractérisé en ce que** l'entonnoir (1) est repoussé dans une tôle ronde et présente une paroi intérieure polie.

10. Dispositif selon l'une quelconque des revendications précédentes, **caractérisé en ce que** l'entonnoir (1), l'organe de blocage (14) et les autres composantes du dispositif de dosage sont serrés les uns avec les autres à l'aide de plusieurs moyens de traction (11).

11. Dispositif selon l'une quelconque des revendications précédentes, **caractérisé en ce que** la paroi de l'entonnoir (1) présente par rapport à son axe longitudinal (2) un angle α de -10° à 50°, de préférence de 25° à 30°.

12. Dispositif de blocage pour dispositif de dosage selon l'une quelconque des revendications précédentes, comprenant un organe de blocage (14) réglable dans deux positions terminales (A, C) ainsi que dans une position centrale (B) et deux organes de commande linéaire (22, 23) disposés coaxialement qui permettent respectivement de régler l'organe de blocage (14),
**caractérisé en ce que**
les deux organes de commande linéaire (22, 23) sont actionnables indépendamment l'un de l'autre.

13. Procédé de dosage de produit en vrac au moyen d'un dispositif selon l'une quelconque des revendications précédentes, comprenant un organe de blocage réglable au moyen d'un premier organe de commande linéaire et un deuxième organe de commande actionnable indépendamment de celui-ci, au moyen duquel la sortie du dispositif peut être libérée avec possibilité de fermeture aussi bien partiellement que totalement,
- l'organe de blocage s'ouvrant d'abord complètement,
- l'organe de blocage s'ouvrant partiellement lorsqu'une première quantité de remplissage de produit en vrac prédéfinissable notamment par le poids est atteinte et
- l'organe de blocage se fermant totalement lorsqu'une deuxième quantité de remplissage de produit en vrac prédéfinissable notamment par le poids est atteinte,
l'organe de blocage se fermant d'abord totalement lorsque la deuxième quantité de remplissage de produit en vrac prédéfinissable notamment par le poids est atteinte et s'ouvrant et se fermant ensuite partiellement à plusieurs reprises brièvement.

14. Procédé selon la revendication 13, **caractérisé en ce que** l'ouverture et la fermeture partielle et brève à plusieurs reprises de l'organe de blocage est réalisée en actionnant le deuxième organe de commande linéaire.
